Europäisches Patentamt

European Patent Office

Office européen des brevets

(11) Publication number: **0 362 907**
**A2**

## EUROPEAN PATENT APPLICATION

(21) Application number: 89200204.9

(51) Int. Cl.5: **F16B 47/00**

(22) Date of filing: 31.01.89

(30) Priority: 05.10.88 JP 129996/88 U

(43) Date of publication of application:
**11.04.90 Bulletin 90/15**

(84) Designated Contracting States:
**AT BE CH DE ES FR GB GR IT LI LU NL SE**

(71) Applicant: TIGER PRODUCTS B.V.
**Winde 3 P.O. Box 11**
**NL-5660 AA Geldrop(NL)**

(72) Inventor: Takayoshi Watanabe
**135-1, Nikura, Fujiyoshida City**
**Yamanashi Prefecture(JP)**

(74) Representative: Noz, Franciscus Xaverius, Ir.
et al
**Algemeen Octrooibureau P.O. Box 645**
**NL-5600 AP Eindhoven(NL)**

(54) Sucker fixing tool.

(57) A supporting device comprising a sucking cup
and a supporting member that is substantially coupled to the center of said sucker cup and is provided
with a mounting portion for supporting an article near
one end of said supporting member. An annular
member surrounds at least partly the supporting
member and abuts with one end a peripheral portion
of the sucking cup, whilst a resilient member has
been arranged between the annular member and the
supporting member in such a way that said resilient
member is compressed and pushes the annular
member towards the peripheral portion of the sucking cup when the supporting member is pushed
towards the sucking cup.

EP 0 362 907 A2

This invention relates to a supporting device comprising a sucking cup and a supporting member that is substantially coupled to the center of said sucking cup and is provided with a mounting portion for supporting an article near one end of said supporting member.

A supporting device using a sucker cup is common in the prior techniques and is generally used in bathrooms and kitchens of ordinary households in view of free mounting and easy removal. The supporting device is e.g. used for hanging something,e.g. a mirror or wall curtain. The device is stuck fast to a preferred wall surface, or the like by pushing the sucking cup manually. It sticks because the interior of the sucking cup is maintained in a vacuum.

With previous devices comprising a sucking cup air often leaks between the sucking cup and the wall surface due to changes in the ambient temperature, or the like,so that the vacuum in the sucking cup will not be maintained for a long time.Consequently, it is a disadvantage that the known devices using sucking cups easily fall off the wall, or the like.

An object of this invention is to provide supporting device with a sucking cup that is not easily removed from a wall surface,and is held there for a long time.

So according the invention an annular surrounds at least partly the supporting member and abuts with one end a peripheral portion of the sucking cup,whilst a resilient member has been arranged between the annular member and the supporting member in such a way that said resilient member is compressed and pushes the annular member towards the peripheral portion of the sucking cup when the supporting member is pushed,towards the sucking cup.

After mounting the supporting device on a wall or the like the supporting member is urged by the resilient member in the direction away from the sucking cup. Therefore; the center portion of the sucking cup,which is fixed to the supporting member,is pulled,which aids in maintaining the vacuum that is formed between the sucking cup and the wall surface for a long time.

The annular member is pushed by the resilient member against the peripheral portion of the sucking cup preventing air leakage between the inside and outside of the sucking cup. This leak preventive function also contributes to maintaining a vacuum inside the sucking cup.

The present invention will be further described with reference to the attached drawings.

Figure 1 is a side view of a supporting device according this invention, in which the left half is shown in a cross-section.

Figure 2 shows and exploded oblique view of the supporting device of the present invention.

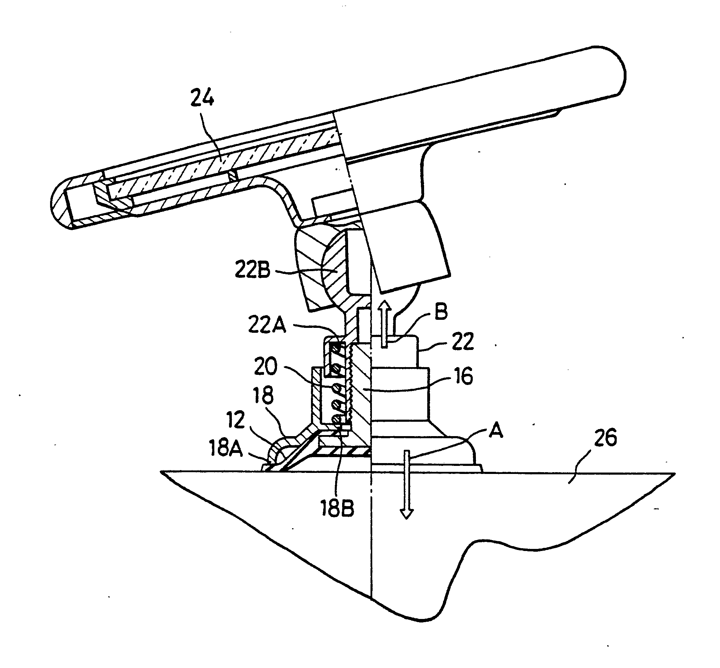

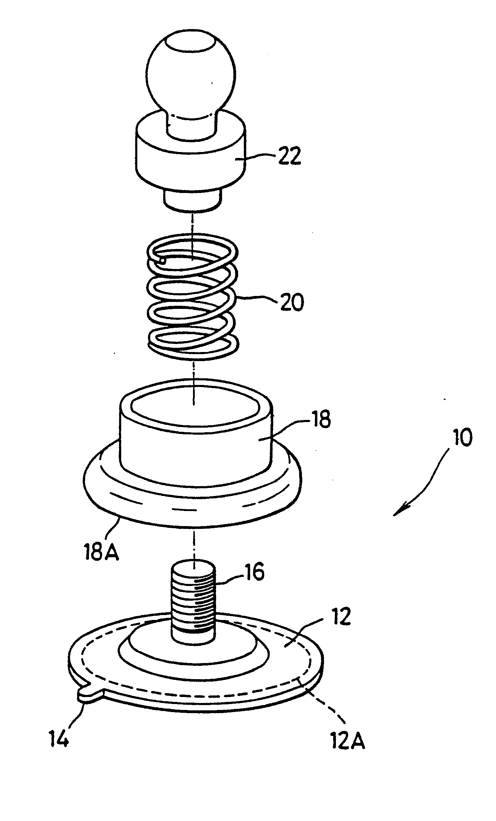

Referring to Figs. 1 and 2,the supporting device 10 comprises a sucking cup 12 made of rubber,or similar flexible material ,and is formed in the shape of an inverted cup. As generally known, by pushing the sucking cup onto a wall surface or the like, it becomes flat while evacuating air from the interior. There is a projection 14 on the periphery of the sucking cup 12 which can be used for removing the sucking cup 12 from the wall. In addition, at the center portion of the sucking cup 12, there is a protruding threaded rod 16 for mounting a supporting member (to be described later).

The threaded rod 16 is surrounded by an annular cover 18. The lower end periphery 18A of the annular cover 18 has a diameter smaller than the outer diameter of the sucking cup 12,and abuts the upper surface 12A of the peripheral portion of the sucking cup 12. In the annular cover 18,there is a flange like spring seat 18B,which supports the lower end portion of a coil spring 20.

The coil spring 20 is surrounded by an upper cylindrical portion of the annular cover 18. The threaded rod 16 has been screwed into a supporting member 22, constituting a mounting rod. On the supporting member 22 has been provided a spring seat portion 22A supporting the upper end of the coil spring 20. In addition, the supporting member 22 has at its upper end spherical portion 22B acting as a mounting portion. On the mounting portion 22B, the article to be supported, e.g. a mirror 24,can be mounted at a variable angle.

In the supporting device 10 of the present invention as described above, the sucking cup 12 is in a cup-like shape before the supporting device is mounted on a wall surface 26 or the like. At that time,no force acts on the coil spring 20 arranged between the annular cover 18 and the supporting member 22.

When the supporting device 10 is mounted on the wall surface 26 as shown in Fig.1, namely when the sucking cup 12 is pushed onto the wall surface 26 making the sucking cup 12 flat, the distance between the spring seat portion 18B of the cover 18 and the spring seat portion 22A of the supporting member 22 is reduced whilst compressing the coil spring 20.

Thus ,the coil spring 20 urges the cover 18 in the direction of arrow A of Fig.1 (downward), whilst also acting on the supporting member 22 in the direction of arrow B of Fig.1 (upward). Consequently, the lower end 18A of the annular cover 18 presses against the peripheral portion 12A of the sucking cup 12 thereby pulling the center part of the sucking cup 12 upwards via the threaded rod 16. As a result of this action, the vacuum inside the sucking cup 12 is maintained by the force of pulling up the center portion via the said supporting member .

In addition, the leakage of air between the inside and outside of the sucker is prevented by the pushing force of the cover 18 on the peripheral portion 12A.

Known supporting devices having sucking cups stick to the wall surface only by the recovery force of the sucking cup. On the contrary, with the device according the present invention,not only the recovery force of the sucking cup 12 but also the coil spring 20 effectively and efficiently function to stick the device on the wall or the like.

Therefore, even if there is a slight change in ambient temperature or the like, the coil spring 20 can prevent air leakage in small amounts, thereby maintaining a constant vacuum inside the sucking cup 12. Thus, the supporting device 10 will not come off the wall surface 26 and be maintained sticking fast to the wall surface or the like,for a long time.

A coil spring 20 is used in the embodiment ,shown and described,however the invention is not limited thereto; any elastic material such as a leaf spring or compressed elastic rubber may be used also.

A mirror 24 is shown in the figures as an article to be supported, however, also other articles could be supported. Furthermore, in the embodiment shown in the figures the mounting portion is. a spherical body 22B, however also said body can also be replaced by an other member e.g. a hook or the like.

## Claims

A supporting device comprising a sucking cup (12) and a supporting member (22) that is substantially coupled to the center of said sucking cup (12) and is provided with a mounting portion (22B) for supporting an article (24) near one end of said supporting member (22), characterised in that an annular member (18) surrounds at least partly the supporting member (22) and abuts with one end a peripheral portion (12a) of the sucking cup (12)- ,whilst a resilient member (20) has been arranged between the annular member (18) and the supporting member (22) in such a way that said resilient member (20) is compressed and pushes the annular member (18) towards the peripheral portion (12a) of the sucking cup (12) when the supporting member (22) is pushed towards the sucking cup 12.